**Europäisches Patentamt**

**European Patent Office**

**Office européen des brevets**

(19)

(11) Veröffentlichungsnummer: **0 465 878 A2**

# (12) EUROPÄISCHE PATENTANMELDUNG

(21) Anmeldenummer: **91109975.2**

(22) Anmeldetag: **18.06.91**

(51) Int. Cl.⁵: **B06B 1/06**

(30) Priorität: **13.07.90 DE 9010566 U**

(43) Veröffentlichungstag der Anmeldung:
**15.01.92 Patentblatt 92/03**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Binder, Josef, Dr.**
**10, Allée des Lys**
**F-31820 Pibrac(FR)**
Erfinder: **Dünstl, Josef**
**Rudolf-Harbig-Strasse 15**
**W-8502 Zirndorf(DE)**
Erfinder: **Willner, Siegfried**
**Pfälzerstrasse 10**
**W-8620 Lichtenfels(DE)**

(54) **Piezokeramischer Ultraschallwandler.**

(57) Auf einem Keramikteil 2 werden mehrere Bereiche 4, 5 als piezokeramischer Ultraschallwandler aktiviert. Jeder Wandler 4, 5 ist einzeln als Sender ansteuerbar und kann ebenso als Empfänger dienen. Werden zwei dieser Keramikteile 2, 2a parallel zueinander in einen geringen Abstand angeordnet, ist diese Anordnung als Ultraschallgabelschranke zu verwenden. Die Wandler 4a, 5a auf dem einen Keramikteil 2a fungieren als Sender, die Wandler 4, 5 auf dem anderen Keramikteil 2 als Empfänger. Abhängig davon welches Medium sich zwischen dem einen Ultraschallsender 4a, 5a und dem dazugehörigen Ultraschallempfänger 4, 5 befindet, ist das Empfangssignal unterschiedlich stark, was eine weitere Auswertung z. B. die Angabe des Flüssigkeitspegels 12 in einem Behälter 10 ermöglicht.

FIG 4

Die Erfindung betrifft einen piezokeramischen Ultraschallwandler gemäß Oberbegriff von Anspruch 1. Bekannte piezokeramische Ultraschallwandler bestehen aus einem Keramikteil, bei dem in einem lokal begrenzten Bereich an der Vorder- und Rückseite eine Metallisierung aufgebracht ist. Durch entsprechende Bearbeitung ist dieser Bereich als piezokeramischer Wandler aktiviert.

Für Anwendungsfälle, bei denen mehrere piezokeramische Ultraschallwandler Verwendung finden, werden bisher mehrere einzelne Ultraschallwandler in einem gemeinsamen Gehäuse untergebracht und einzeln verdrahtet. Dies hat den Nachteil, daß man für jeden Ultraschallwandler mehrere Kontaktierungen und Fertigungsschritte zum Einbau in das Gehäuse vornehmen muß.

Es ist Aufgabe der vorliegenden Erfindung einen Ultraschallwandler zu schaffen, der im oben beschriebenen Anwendungsfall das für jeden einzelnen Ultraschallwandler durchzuführende Kontaktieren und Einbauen in ein Gehäuse überflüssig macht.

Die erfindungsgemäße Lösung dieser Aufgabe ist in Anspruch 1 angegeben.

Die Erfindung wird anhand der Figuren und der Begriffs-/Bezugszeichenliste näher erläutert.

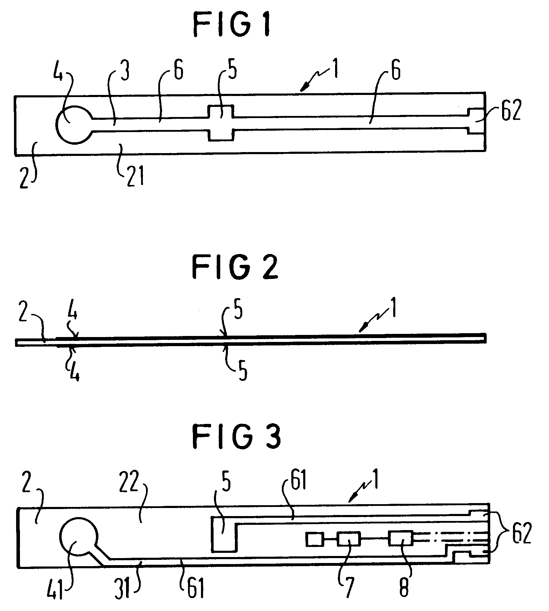

Figur 1    zeigt einen piezokeramischen Ultraschallwandler 1 in Draufsicht,

Figur 2    zeigt den Ultraschallwandler 1 in Seitenansicht,

Figur 3    zeigt den Ultraschallwandler 1 von der Rückseite, und

Figur 4    zeigt den Einsatz von zwei Ultraschallwandlern in einer Ultraschallmeßeinrichtung.

Der Ultraschallwandler 1 besteht aus einem flachen, länglichen Piezo-Keramikteil 2 auf welches an der Vorder- und Rückseite eine Metallisierung 3, 31 aufgebracht ist. Die auf auf der Vorderseite 21 des Keramikteils 2 aufgebrachte Metallisierung 3 ist anders gestaltet als die Metallisierung 31 auf der Rückseite 22 des Keramikteils 2. Die Metallisierung 3 setzt sich zusammen aus Wandlerbereichen 4, 5 die eine große Fläche bedecken und Zuleitungen 6, die im wesentlichen länglich und schmal sind. Die Metallisierung 31 auf der Rückseite 22 setzt sich aus Wandlerbereichen 4, 5 und Zuleitungen 61 zusammen. Die Wandlerbereiche 4, 5 sind an der Vorder- und Rückseite genau gleich groß und gegenüberliegend angebracht. Die Zuleitungen 6, 61 sind an den Wandlerbereichen 4, 5 angeschlossen und verlaufen an Vorder- und Rückseite versetzt zueinander. Die Zuleitungen 6, 61 enden am Rand des Keramikteils 2 und sind dort als Anschlußflächen 62 ausgebildet. Die Anschlußflächen 62 können durch Bonden oder Löten kontaktiert werden.

Nur das Piezo-Keramikmaterial zwischen den Wandlerbereichen 4, 5 ist als piezokeramischer Wandler aktiviert. Dazu wird eine Hochspannungsquelle an den Wandlerbereichen 4, 5 an der Vorder- und Rückseite angeschlossen. Durch Anlegen eines hohen elektrischen Feldes wird das Piezo-Keramikmaterial in den Wandlerbereichen 4, 5 polarisiert und damit als Ultraschallwandler aktiviert. Um das Keramikmaterial nur in den Wandlerbereichen 4, 5 zu aktivieren, verlaufen die Zuleitungen 6, 61 an der Vorder- und Rückseite versetzt zueinander. Dadurch ist erreicht, daß zwischen den Zuleitungen an der Vorder- und Rückseite kein so starkes Feld entsteht, daß das dazwischenliegende Keramikmaterial als Wandler aktiviert wird.

Optional trägt das Keramikteil 2 noch zusätzliche Leiterbahnen und elektronische Bauelemente. Dies erlaubt beispielsweise, daß die zur Ansteuerung der Ultraschallwandler benötigte Elektronik in Form einer Hybridschaltung 7, 8 direkt auf dem Keramikteil 2 Platz findet.

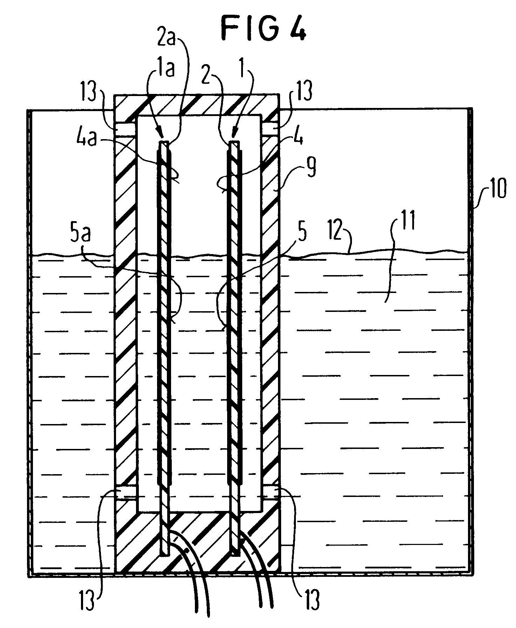

Die Figur 4 zeigt zwei gleichartige Ultraschallwandler 1, 1a die sich in einem Gehäuse 9 befinden. Das Gehäuse 9 sitzt in einem Behälter 10, der mit einer Flüssigkeit 11 gefüllt ist. Der Füllstand der Flüssigkeit 11 schwankt und der Pegel 12 soll mit Hilfe einer Ultraschallmeßstrecke erfaßt werden. Durch Ausgleichsöffnungen 13 im Gehäuse 9 ist gewährleistet, daß auch innerhalb des Gehäuses 9 der Pegel 12 vorhanden ist. Zwischen den Wandlerbereichen 4a und 4 sowie 5a und 5 ergibt sich jeweils eine Ultraschallmeßstrecke. Die beiden Ultraschallwandler 1a bzw. 1 liegen in einem Abstand von ca. 4 mm, parallel zueinander angeordnet entfernt. Die aktivierten Bereiche 4a, 5a auf dem Ultraschallwandler 1a werden gleichzeitig mit einem elektrischen Impuls zum Aussenden eines Ultraschallsignals angeregt. Die gegenüberliegenden Wandlerbereiche 4, 5 des Ultraschallwandlers 1 sind als getrennte Empfänger geschaltet.

Im gezeigten Fall ist das Medium zwischen den Ultraschallwandlern 4a, 4 ein Gas, z.B. Luft, das zwischen den Ultraschallwandlern 5a, 5 liegende Medium ist eine Flüssigkeit, z.B. Öl. Aufgrund der stark unterschiedlichen Schallimpedanz einer Flüssigkeit und eines Gases wird vom sendenden Ultraschallwandler 4a wesentlich weniger Energie auf den empfangenden Ultraschallwandler 4 übertragen als der Ultraschallwandler 5a, der von einer Flüssigkeit bedeckt ist, auf den Ultraschallempfänger 5 überträgt. Dementsprechend sind auch die vom Wandlerbereich 4 und Wandlerbereich 5 gelieferten Empfangssignale deutlich unterschiedlich.

Mit der beschriebenen Anordnung lassen sich somit drei verschiedene Pegel der Flüssigkeit bestimmen:

1. Flüssigkeit ist oberhalb der Wandlerbereiche 4, 4a;

2. Flüssigkeit liegt zwischen den Wandlerbereichen 4, 4a und den Wandlerbereichen 5, 5a;

3. Flüssigkeit liegt unterhalb der Wandlerbereiche 5, 5a.

Durch eine entsprechende Anzahl von zusätzlichen Wandlerbereichen auf den Ultraschallwandlern 1 bzw. 1a läßt sich die Auflösung dementsprechend erhöhen.

Eine Hybridschaltung auf dem Ultraschallwandler 1 kann die Auswertung der von den Wandlerbereichen 4 und 5 empfangenen Signale vornehmen und ein analoges oder digitales, der Auswertung entsprechendes Signal abgeben.

**Patentansprüche**

1. Piezokeramischer Ultraschallwandler, bestehend aus einem plattenförmigen Keramikteil, **dadurch gekennzeichnet**,

    - daß auf dem Keramikteil (2) jeweils auf der Vorderseite (21) und Rückseite (22) mehrere, lokal begrenzte, gegenüberliegende Bereiche (4, 5) metallisiert sind und

    - diese Bereiche (4, 5) des Keramikteils (2) durch Anlegen eines hohen elektrischen Feldes polarisiert und damit als Ultraschallwandler aktiviert sind.

2. Ultraschallwandler nach Anspruch 1, **dadurch gekennzeichnet**,

    - daß vom Rand des Keramikteils (2) Zuleitungen (6, 61) zu den Wandlerbereichen (4, 5) an Vorderseite (21) und Rückseite (22) führen und

    - die Zuleitungen (6), die zu den Wandlerbereichen (4, 5) an der Vorderseite (21) führen, versetzt zu den Zuleitungen (61) verlaufen, die zu den Wandlerbereichen (4, 5) an der Rückseite (22) führen.

3. Ultraschallwandler nach Anspruch 1, oder 2 **dadurch gekennzeichnet**,

    daß auf dem Piezo-Keramikteil (2) zusätzlich Leiterbahnen und elektronische Bauteile (7, 8) aufgebracht sind.

4. Ultraschallwandler nach Anspruch 1, **dadurch gekennzeichnet**,

    daß zwei Ultraschallwandler (1, 1a) so parallel zueinander gegenüberliegend angeordnet sind, daß zwischen den aktivierten Wandlerbereichen (4, 4a, 5, 5a) der jeweils gegenüberliegenden Ultraschallwandler (1, 1a) eine Ultraschallmeßstrecke entsteht.

# FIG 1

# FIG 2

# FIG 3

# FIG 4